Europäisches Patentamt

**European Patent Office**

**Office européen des brevets**

(19)

(11) Veröffentlichungsnummer: **0 062 224**
**A1**

(12) **EUROPÄISCHE PATENTANMELDUNG**

(21) Anmeldenummer: **82102377.7**

(22) Anmeldetag: **23.03.82**

(51) Int. Cl.³: **G 11 B 23/02**

(30) Priorität: **31.03.81 DE 8109502 U**

(43) Veröffentlichungstag der Anmeldung: **13.10.82**
**Patentblatt 82/41**

(84) Benannte Vertragsstaaten: **AT BE CH DE FR GB IT LI NL SE**

(71) Anmelder: **BASF Aktiengesellschaft,**
**Carl-Bosch-Strasse 38, D-6700 Ludwigshafen (DE)**

(72) Erfinder: **Huber, Manfred, Bergstrasse 36,**
**D-7602 Oberkirch (DE)**
Erfinder: **Schindler, Robert, Hafnerweg 23,**
**D-7570 Baden-Baden (DE)**

(54) **Verpackung für Aufzeichnungsträger.**

(57) Eine Verpackung (50) für eine Mehrzahl von übereinandergestapelten Bandwickeln oder -spulen (7) ist mit einer Zentralhalterung versehen und besteht aus zwei Boden- und Deckelteilen (1, 2), die zusammen tortenschachtelartig geformt sind, wobei der Bodenteil (1) im wesentlichen flach und der Deckelteil (2) wie ein Tortenschachteldeckel ausgebildet ist und wobei der Deckelteil (2) und der Bodenteil (1) je mit einem Handgriff (15) zum Tragen der geschlossenen Verpackung bzw. des Bodenteils (1) versehen sind. Dabei können Deckelteil (2) und Bodenteil (1) mit Vorsprüngen (18) und Vertiefungen (4, 19) zum im wesentlichen abstandslosen Stapeln mehrerer Behälter (50) ausgebildet sein.

## Verpackung für Aufzeichnungsträger

Die Erfindung betrifft eine Verpackung für eine Mehrzahl von übereinandergestapelten, als Bandwickel oder -spulen auf ringförmigen Wickelkernen bzw. Flanschspulen aufgewickelten bandförmigen Aufzeichnungsträgern, wobei zumindest einem der Wickelkerne oder einer der Flanschspulen eine Kernhalterung zugeordnet ist, wobei mindestens zwei in der Draufsicht etwas größer als die Draufsichtfläche der vollen Wickelkerne bzw. der Flanschspulen ausgebildete Boden- und Deckelteile vorgesehen sind.

Unter Aufzeichnungsträgern werden dabei jede Art von kreisförmig aufwickelbaren Aufzeichnungsträgern, insbesondere Magnetaufzeichnungsträger verstanden z.B. Bildfilme, Magnetfilme und Magnetbänder.

Magnetbänder werden auf flanschlosen Wickelkernen oder Flanschspulen gemäß DIN 45 517 aufgewickelt in den Handel gebracht. Die Kerne oder Spulen sind auf beiden Stirnseiten flach und daher nur über zusätzliche Verriegelungsmittel arretierbar, wenn sie in Mehrzahl übereinandergestapelt sind. Zum Versand der Bandwickel dient üblicherweise eine Kartonverpackung mit schalenförmigen Kunststoff-Einsätzen. Diese Verpackung ist unwirtschaftlich und umständlich in der Handhabung. Hinsichtlich einer einfachen Abfallbeseitigung ist die Verwendung von Einsatzschalen aus Polystyrolschaum oder ähnlichen Schaummaterialien nachteilig.

### Stand der Technik

Mit der DE-OS 26 55 254 ist eine Verpackung für flanschlose Bandwickel bekannt, die aus zwei flachen Paletten und einer Schrumpf-Schlauchfolie besteht und einen Bandwickel-

De/P

0062224

stapel umschließt. Damit ist jedoch nur eine Einweg-Verpackung bekannt, die noch dazu nur die Ober- und Unterseite des Stapels gegen Beschädigungen schützen kann. Gegen Verrutschen der Bandwickel sind spezielle Wickelkerne mit miteinander verriegelbaren Fortsätzen erforderlich.

Für einen Bandwickelstapel aus einzelnen Einzelflanschspulen ist es bekannt, einen Behälter vorzusehen, in dem Mittel zur Erzeugung eines axial auf die Spulen ausgerichteten Druckes zum Zusammenhalten der Einflanschspulen vorgesehen sind (s. z.B. DE-GM 7148615).

Auf dem Gebiet der Magnetplattenstapel ist es bekannt, tortenschachtelartige Gehäuse für untrennbare Magnetplatten-Stapeleinheiten zu verwenden. Dabei ist in einer Vertiefung im Gehäusedeckel ein Griff vorgesehen, der dazu dient, den geschlossenen Stapel zu transportieren, mit dem Gehäuse auf ein Antriebsgerät aufzusetzen, den Gehäuseboden und den Stapel mit dem Gerät zu verbinden und danach den Gehäusedeckel abzunehmen (s. z.B. DE-OS 15 24 746).

Das Gewicht von üblichen Rohbandwickeln für die Musikcassettenproduktion liegt bei ca. 0,6 kg, bei einem Stapel also bei 9 bis 12 kg.

Es ist Aufgabe der vorliegenden Erfindung, eine transport- und handhabungssichere Verpackung für die Mehrfachverwendung beim Transport von Aufzeichnungsträgern, insbesondere von Rohbandwickeln, bereitzustellen, welche die Bandwickel vor Staub und anderen Umwelteinflüssen schützt.

Die Aufgabe wird gelöst mit einer Verpackung für eine Mehrzahl von übereinandergestapelten, als Bandwickel oder -spulen auf ringförmigen Wickelkernen bzw. Flanschspulen aufgewickelte bandförmige Aufzeichnungsträger, wobei zu- mindest einem der Aufzeichnungsträger oder der Wickelkerne oder einer der Flanschspulen eine Zentralhalterung zugeordnet ist, und mindestens zwei in der Draufsicht etwas größer als die Draufsichtfläche der vollen Wickelkerne bzw. der Flanschspulen ausgebildete Boden- und Deckelteile vorgesehen sind, wenn erfindungsgemäß der Deckelteil und/oder der Bodenteil mit einem Handgriff zum Tragen der geschlossenen Verpackung oder des Bodenteils mit den Aufzeichnungsträgern versehen ist.

Damit wird ein problemloses Handhaben der geschlossenen und der geöffneten vollen oder leeren Verpackung gleichermaßen erreicht.

In weiteren konstruktiven Ausgestaltungen der Verpackung sind die Boden- und Deckelteile tortenschachtelartig geformt, wobei insbesondere das Deckelteil tortenschachtelartig ausgebildet ist.

Zweckmäßig ist die Zentralhalterung für die Spulen oder Wickelkerne als Zylinder-Einprägung im Bodenteil bzw. als Einbuchtung im Deckelteil ausgebildet, wodurch eine einfache einstückige Herstellung im Tiefzieh- oder Spritzgußverfahren möglich wird.

Vorteilhafterweise kann an der Einprägung bzw. Ausbuchtung jeweils ein Handgriff vorgesehen sein, der ebenfalls gleichzeitig mit herstellbar ist.

In weiterer praktischer Ausbildung sind Deckel- und Bodenteile mit Stapelfortsätzen bzw. -vorsprüngen ausgebildet, die in die Einprägungen bzw. Einbuchtungen des jeweilig anderen Teils zur Stapelung eingreifen.

0062224

Es ist vorteilhaft auch möglich, um den Umfang der Einprägung im Bodenteil eine Ringvertiefung zur Aufnahme von Wickelkern- oder Spulen-Fortsätzen vorzusehen, so daß eine statisch stabile Lagerung der Bandrollen erreicht wird.

Es ist ferner möglich, an der Außenseite der Boden- und Deckelteile Aussparungen für Verschlußbänder - für einen narrensicheren Verschluß der vollen Verpackung - vorzusehen.

Praktisch ist es ferner günstig, wenn um die Einbuchtung im Deckelteil ein aus einem oder mehreren Teilen bestehender, gummielastisch federnder Körper angeordnet ist, wodurch die Aufzeichnungsträger oder Spulen oder Wickelkerne axial druckbeaufschlagt werden und dadurch radial nicht wesentlich verrutschen können.

Einzelheiten der Erfindung sind aus Ausführungsbeispielen der Verpackung, das nachfolgend beschrieben und in der Zeichnung dargestellt ist, entnehmbar.

<u>Inhalt der Zeichnung</u>

Es zeigen

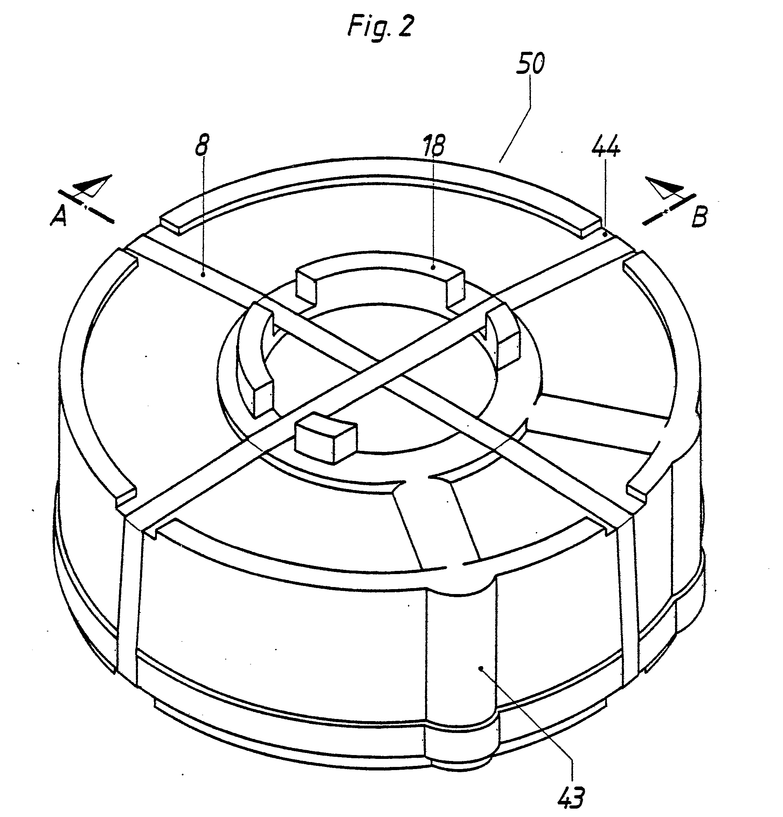

Figur 1    einen Querschnitt gemäß Schnittlinie A-B in Figur 2 durch einen ersten Verpackungsbehälter mit auf flanschlosen Ringkernen aufgewickelten Bandwickeln

Figur 2    eine perspektivische Außenansicht des Behälters

Figur 3    den Bodenteil des Behälters der Figuren 1 und 2 in perspektivischer Ansicht

Figur 4    einen Querschnitt gemäß Schnittlinie C-D in Figur 5 durch einen zweiten Verpackungsbehälter mit Bandwickeln

0062224

Figur 5    eine perspektivische Außenansicht des zweiten Behälters

Figur 6    den Bodenteil des Behälters der Figuren 4 und 5 in perspektivischer Ansicht.

In der Zeichnung sind als Ausführungsbeispiele zwei Verpackungsbehälter für Magnetbandwickel dargestellt, wobei die Breite des Magnetbandes sehr klein gegenüber dem Durchmesser des Bandwickels sein soll.

Der Behälter 50 besteht aus einem flachen Bodenteil 1 und einem tortendeckelförmigen Deckelteil 2, die miteinander etwa luftdicht verbindbar sind. Es ist ebenso möglich, den Bodenteil 1 als Tortendeckel und den Deckelteil 2 flach auszubilden, da die Unter- und Oberseite des Behälters nicht von vornherein festgelegt ist. Die Festigkeit der Teile muß geeignet eingestellt werden, und dabei ist es unabhängig von der Form der Teile wichtig, daß diese das Gewicht des umschlossenen Stapels aufnehmen können.

Durch die fast luftdichte Verbindung der Boden- und Deckelteile 1 und 2 und deren feste Ausbildung sind die Aufzeichnungsträger allseitig umschlossen und gegen Staub, Feuchtigkeit, Temperatur und mechanische Einflüsse bei der Handhabung oder beim Transport geschützt. Im Hinblick auf die wirtschaftlich günstige Herstellung durch Tiefziehen oder Spritzgießen besteht der Behälter 50 bzw. 60 aus für diese Herstellungsverfahren geeigneten Kunststoffen wie z.B. Polystyrol, ABS, Hart-PVC usw.

Als Materialien scheiden alle Stoffe aus, wie z.B. Papier, Pappe, geschäumtes Polystyrol usw., soweit diese Stoffe nicht abriebfest sind und sich bei ihrer Handhabung unerwünschte Partikel ablösen können, die sich auf den Aufzeichnungsträgern festsetzen können.

Der Behälter 50 wird vorzugsweise im Tiefziehverfahren hergestellt. Sein Bodenteil 1 besteht aus einem etwa ebenen Teller 3 mit einer zentral hochgezogenen Zylindereinprägung 4, deren Außendurchmesser zur problemlosen Entnahme etwas kleiner ist als der Innendurchmesser der Ringkerne 11 und einem umlaufenden äußeren Rand 5.

Die dargestellten Ringkerne 11 besitzen beispielsweise eine im wesentlichen horizontalsymmetrische, stapelbare und radial selbstverriegelnde Form. Von der Horizontalebene nach oben und unten ragende Stapelfortsätze 1C greifen in die benachbart liegenden Ringkerne 11 ein und bilden einen axial und radial sicheren Verbund. Im Hinblick auf die vorliegende, erfindungsgemäße Verpackung ist ein solcher aufwendig herzustellender Wickelkern nicht notwendig. Jede geeignete Kernform wie etwa der NARTB-Kern gemäß DIN 45 517 oder schüsselartige Kerne lassen sich ebenfalls problemlos in einem solchen Behälter transportieren und handhaben.

Die unteren Stapelvorsprünge 10 oder -fortsätze des untersten Ringkerns 11 können in eine um die Zylindereinprägung 4 angeordnete Nut 9 eintreten, so daß sich eine flache Ablage der freien Wickellagen auf einer separaten Zwischenlage 21 ergibt. Diese ringförmigen Zwischenlagen 21 können aus jedem geeigneten Material geeigneter Dicke bestehen und sind zwischen den Bandwickeln 7 und jeweils dem Boden- bzw. Deckelteil eingelegt. Dadurch wird ein Schutz der einzelnen Bandwickel und besonders der Bandkanten gegen gegenseitiges Berühren und Gegeneinanderreiben erreicht. Der Deckelteil 2 übergreift den Rand 5 des Bodenteils 1 mit einem aufgeweiteren unteren Teil 17 der Zy- linderwand 16, wodurch ein staubdichter Abschluß erhalten wird.

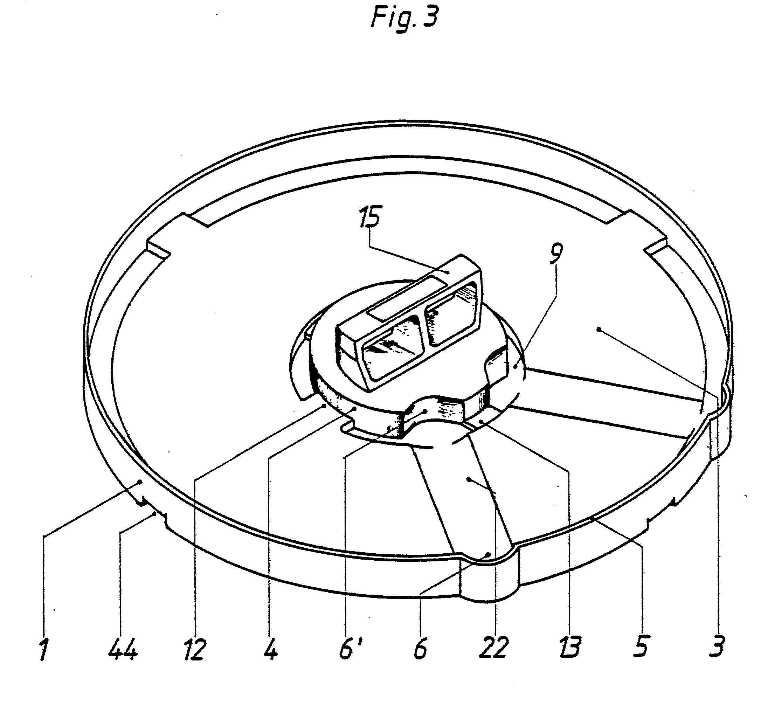

Der Bodenteil 1 ist an mindestens einer Stelle am Rand 5 mit einer radial gerichteten Ausbuchtung 6 versehen, über die eine entsprechende Ausbuchtung 43 des Deckelteils 2 zum Verschließen des Behälters 50 greift. In Figur 3 ist eine auf demselben Radius liegende Fingeraussparung 6' im Umfang der Zylindereinprägung 4 vorgesehen, wobei die Ausbuchtung 6 und Aussparung 6' über eine Radialrinne 22 miteinander verbunden sind. Ausbuchtung 6 und Aussparung 6' dienen als Griffaussparungen zum leichteren Einlegen und Entnehmen der Bandwickel 7. Die zwei Ausbuchtungen 6 im vorliegenden Behälterbeispiel verhindern auch ein gegenseitiges Verdrehen von Boden- und Deckelteil 1 und 2 und dadurch hervorrufbare Bandwickel- und/oder Aufzeichnungsträgerbeschädigungen. Die Ringnut 9 kann wie in Figur 3 sichtbar durch radiale Stege 12 und 13 unterbrochen sein, um für Ringkerne mit Stapelfortsätzen eine Verdrehsicherung zu bilden. Die Stege 13 können mindestens eine Höhe aufweisen, daß die Differenz bis zur Planfläche des Tellers 3 der Länge der Stapelfortsätze des Ringkerns 11 entspricht. Die äußere Ringnut 14 im Bodenteil 1 kann ebenfalls Unterbrechungen aufweisen, die durch die äußeren Aussparungen 44 für die Verschlußbänder 8 im Innenraum des Bodenteils 1 entstehen.

Am Deckelteil 2 sind ebenfalls innere Ringnuten 24 und äußere Ringnuten 23 vorgesehen, die ebenfalls kreuzweise angeordnete Stege aufweisen können. Der Deckelteil 2 weist innerhalb der inneren Ringnut 24 eine nach innen reichende Vertiefung 19 auf, die durch Tiefziehen herstellbar ist und die im Durchmesser der Einprägung 4 im Bodenteil 1 entsprechen kann. Auf der Oberseite der Zylindereinprägung 4 ist zweckmäßig ein Griff 15 vorgesehen und geeignet befestigt, der den Stapel mit dem Bodenteil 1 jedoch ohne Deckelteil 2 leicht und problemlos transportierbar und handhabbar macht. Ein entsprechender Griff 15 kann auch in der Vertiefung 19 im Deckelteil 2 vorgesehen sein, wenn nicht die Vertiefung 19 überspannende Verschlußbänder 8 bereits ein Tragen der gesamten Behältereinheit ermöglichen. Rings um die Vertiefung 19 können außen am Deckelteil 2 Verriegelungserhebungen 18 vorgesehen sein, die derartig angeordnet sind, daß sie in die Zylindereinprägung 4 des daraufgesetzten gleichen Behälters 50 so hineinpassen, daß ein radiales gegenseitiges Verschieben gestapelter Behälter 50 zumindest erschwert, wenn nicht sogar verhindert wird. Die lichte Höhe des Behälters 50 ist von der Form und den Maßen der Boden- und Deckelteile 1 bzw. 2 abhängig und sie bestimmt, wieviel Bandwickel 7 oder Aufzeichnungsträger darin unterbringbar und transportierbar sind. Eine rüttelsichere Ausführung ist dadurch realisierbar, daß in der Ringnut 24 des Deckelteils ein Elastikring 20 z.B. aus gummielastischem Material angebracht ist, der auf den obersten Wickelkern 11 des Stapels zum Toleranzausgleich und zur axialen Fixierung eine Druckkraft ausübt bei geschlossenem Behälter 50. Der Elastikring 20 kann auch aus Einzelteilen bestehen, die zentralsymmetrisch in der Ringnut 24 vorgesehen sind.

Der vorstehend beschriebene Behälter 50 ist geeignet geformt, um günstig durch Tiefziehen hergestellt zu werden, es ist jedoch auch eine Spritzgußherstellung möglich.

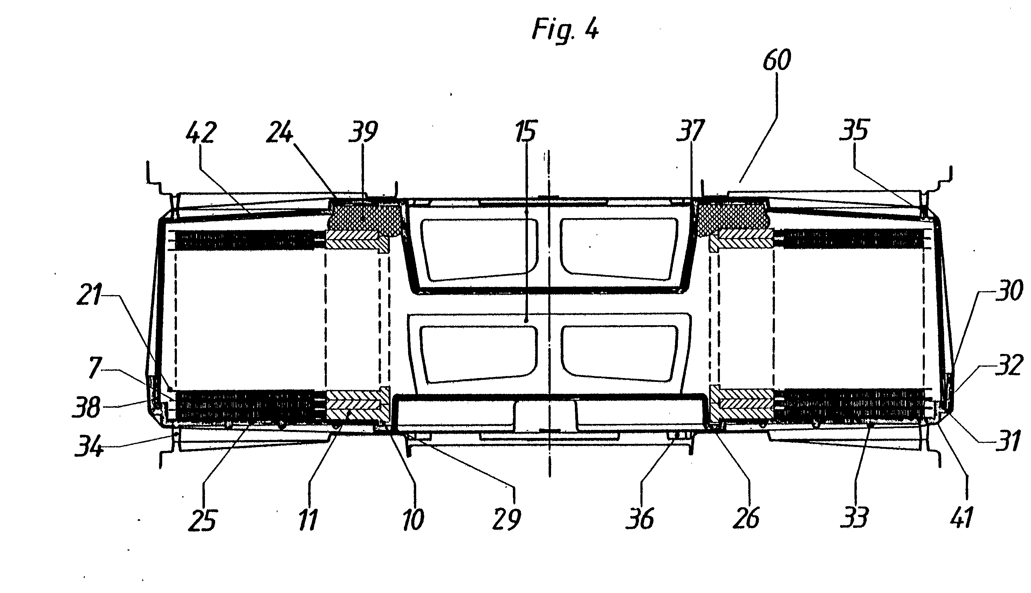

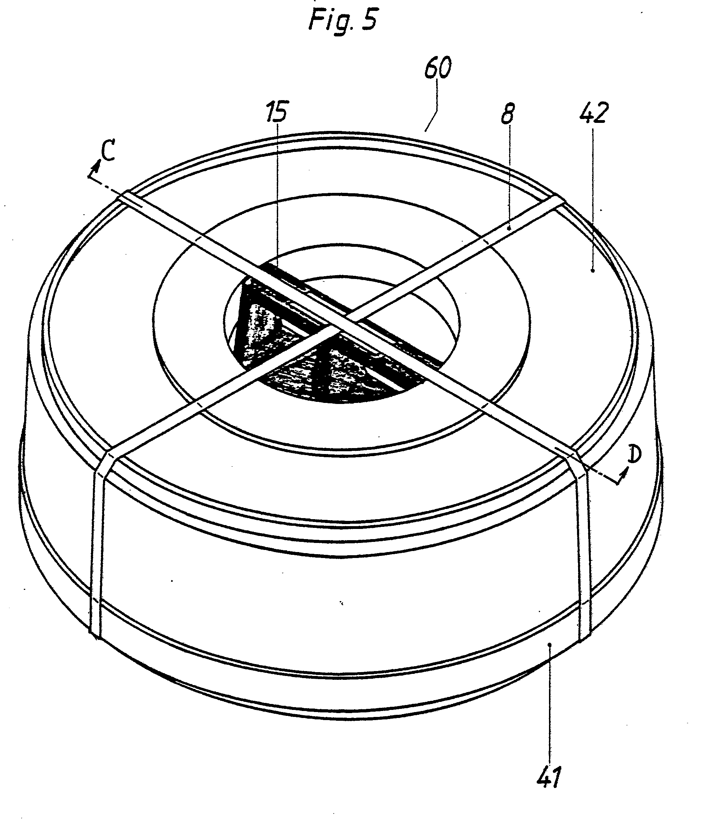

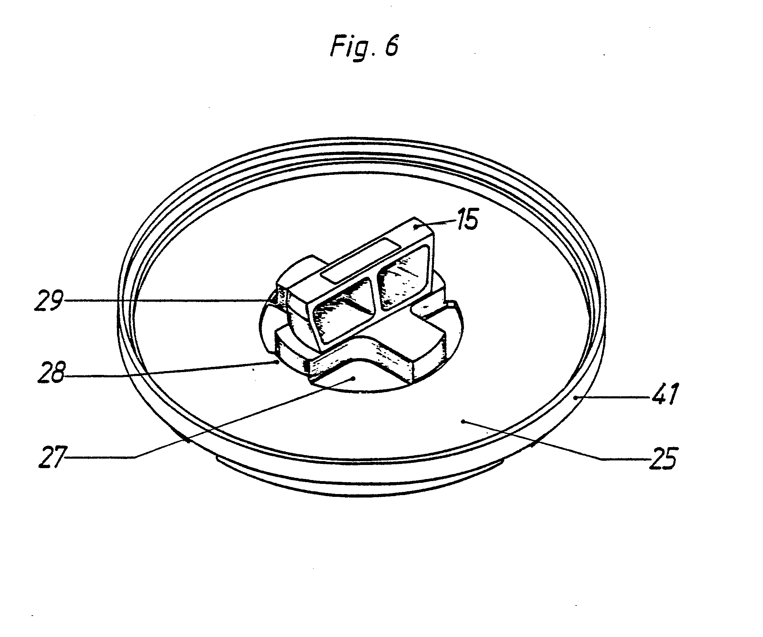

In Figuren 4 bis 6 ist ein Behälter 60 dargestellt, der vorteilhaft im Spritzguß herstellbar ist. Gleiche Teile sind mit denselben Bezugszeichen versehen.

Der Behälter 60 besteht aus einem Bodenteil 41 und einem Deckelteil 42, deren äußere, leicht konische Form den Boden- und Deckelteilen 1 und 2 ähnlich ist. Der Bodenteil 41 besteht aus einem flachen und auf der Innenseite ebenen Teller 25. Zentral ist in diesem Teller 25 eine etwa kreuzförmige Einprägung 26 eingeformt, die den Stapel der Bandwickel 7 gegen radiales Verschieben sichert. Die Einprägung 26 ist im Durchmesser kleiner als der Innendurchmesser der Ringkerne 11. Zur Aufnahme der Stapelvorsprünge 10 der Ringkerne 11 ist der Teller 25 am Umfang der Einprägung 26 in einer Ringnut 9 abgesenkt. Die Tiefe der Ringnut 9 ist dabei gleich oder tiefer als die Länge der Vorsprünge 10 am Kern 11. An gegenüberliegenden Stellen sind Kreuzstege 28 zur Verdrehsicherung vorgesehen, wobei Vertiefungen 29 und Zwischenräume 27 zur leichten und sicheren Einlage und Entnahme der Bandwickel 7 vorhanden sind. Auf der Oberseite der Kreuzeinprägung 26 ist ein Handgriff 15 in geeigneter Weise angebracht, z.B. durch Anspritzen, um das Tragen des Bodenteils 41 mit dem vollen Stapel zu erleichtern. Der Bodenteil 41 hat am äußeren Umfang einen stufenförmig hochgezogenen Rand 30 mit Dichtungsnut 31 zur Aufnahme des Dichtungsringes 32. An seiner Unterseite kann der Bodenteil 41 mit radial und/oder ringförmig verlaufenden Versteifungs- oder Stützrippen 33 ausgebildet sein. Der äußere Stützrand 34 ist höher als die Rippen 33 und dient bei Stapelung gleichgeformter Behälter 60 zur Abstützung des Bodenteils 41 auf einer entsprechenden Ringrippe 35 an der Deckeloberseite. Im Zentrum, innerhalb der Einprägung 26, hat der Bodenteil 41 einen Ringansatz 36, der bei Stapelung mehrerer Behälter 60 zur Sicherung gegen radiales Verschieben in die Aussparung 37 am Deckelteil 42 eingreift. Die Rippen 34 und 36 können Unterbrechungen für Verschlußbänder 8 aufweisen. An der Deckelaußenseite hat man bei dieser Ausführung auf Ausnehmungen für Verschlußbänder 8 verzichtet.

Der Deckelteil 42 kommt mit seinem Öffnungsrand 38 auf die Dichtung 32 zu liegen, so daß ein hermetischer Abschluß zwischen Boden- und Deckelteil 41 und 42 erreicht wird. Der Deckelteil 42 weist hier eine Einbuchtung 37 auf, deren Außendurchmesser etwa dem der Einprägung 26 entspricht. Innerhalb der Einbuchtung 37 ist vorteilhaft ein Handgriff 15 entweder angeformt oder befestigt zum Tragen des geschlossenen Behälters 60 mit Inhalt. Zum Toleranzausgleich und zur axialen Fixierung des Stapels von Bandwickeln 7 kann ein Elastikring 39 oder können einzelne Elastikelemente zentralsymmetrisch in der Ringnut 24 am Umfang der Einbuchtung 37 angebracht sein. Zwischen den einzelnen Bandwickeln 7 und dem Deckelteil 42 bzw. dem Bodenteil 41 können Schutzringfolien 21 geeigneter Dicke aus abriebfestem Material eingelegt sein.

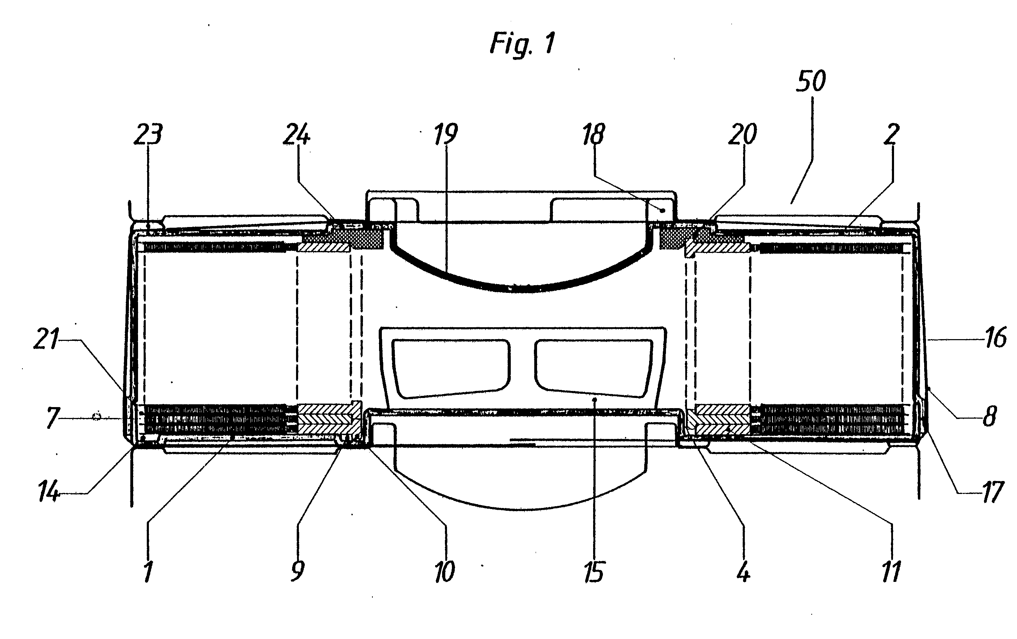

In den Figuren 1 und 4 ist jeweils die Ober- bzw. Unterseite der Nachbarbehälter in einem Stapel angedeutet.

Es ist grundsätzlich möglich, jeden der beschriebenen Behälter 50 und 60 an jede Art von Aufzeichnungsträgern oder jede Bandwickelgröße anzupassen. Jeder der Behälter 50 und 60 weist die nachfolgenden Vorteile auf:

- Sicherung des Stapels im Verpackungsbehälter gegen Verdrehung und Verschiebung
- Behälter ist einem Maximalgewicht anpaßbar
- Leichte Handhabbarkeit des Behälters und des Stapels sowohl in geschlossener als auch in geöffneter Form des Behälters
- Leichtes Entnehmen der Bänder aus dem Behälter
- Die Planflächen der Aufzeichnungsträger sollen mit Zwischenlagen aufeinander liegen, d.h. die Bandwickel sollten sich im Normalfall nicht berühren.

In der Praxis wurde ein einfach herstellbarer, für die Dauer- und Vielfachverwendung geeigneter, Verpackungsbehälter bereitgestellt.

0062224

Schutzansprüche

1. Verpackung für eine Mehrzahl von übereinandergestapelten, als Bandwickel oder -spulen auf ringförmigen Wickelkernen bzw. Flanschspulen aufgewickelten bandförmigen Aufzeichnungsträgern, wobei zumindest einem der Wickelkerne oder einer der Flanschspulen eine Zentralhalterung zugeordnet ist, und mindestens zwei in der Draufsicht etwas größer als die Draufsichtfläche der vollen Wickelkerne bzw. der Flanschspulen ausgebildete Boden- und Deckelteile vorgesehen sind, dadurch gekennzeichnet, daß der Deckelteil (2, 42) und/oder der Bodenteil (1, 41) mit einem Handgriff (15) zum Tragen der geschlossenen Verpackung (50, 60) oder des Bodenteils (1, 41) mit den Bandwickeln (7) versehen ist.

2. Verpackung nach Anspruch 1, dadurch gekennzeichnet, daß Boden- und Deckelteile (1, 2 und 41,42) zusammen tortenschachtelartig geformt und miteinander lösbar verbindbar ausgebildet sind.

3. Verpackung nach Ansprüchen 1 und 2, dadurch gekennzeichnet, daß der Bodenteil (1, 41) im wesentlichen flach und der Deckelteil (2, 42) tortenschachteldeckelartig ausgebildet ist.

4. Verpackung nach Ansprüchen 1 bis 3, dadurch gekennzeichnet, daß die Zentralhalterung als Zylinder-Einprägung (4, 26) im Bodenteil (1, 41) ausgebildet ist.

0062224

5. Verpackung nach Anspruch 4 und einem oder mehreren der Ansprüche 1 bis 3, dadurch gekennzeichnet, daß auf der Zylinder-Einprägung (4, 26) ein Griff (15) vorgesehen ist.

6. Verpackung nach Ansprüchen 1 bis 3, dadurch gekennzeichnet, daß der Deckelteil (2, 42) eine zentrale Einbuchtung (19, 37) aufweist, die koaxial zur Einprägung (4, 26) des Bodenteils (1, 41) angeordnet ist.

7. Verpackung nach Anspruch 6 und einem oder mehreren der Ansprüche 1 bis 3, dadurch gekennzeichnet, daß innerhalb der Einbuchtung (19, 37) ein Handgriff (15) am Deckelteil (2, 42) vorgesehen ist.

8. Verpackung nach Anspruch 4 und einem oder mehreren der Ansprüche 1 bis 3 und 5, dadurch gekennzeichnet, daß an der Oberseite des Deckelteils in die Einprägung (4, 26) des Bodenteils (1, 41) passende Stapelfortsätze (18) angeformt sind.

9. Verpackung nach Anspruch 6 und einem oder mehreren der Ansprüche 1 bis 3 und 7, dadurch gekennzeichnet, daß an der Unterseite des Bodenteils (1, 41) in die Aussparung (37) des Deckelteils (2, 42) passende Stapelvorsprünge (36) angeformt sind.

10. Verpackung nach Ansprüchen 1 bis 9, dadurch gekennzeichnet, daß um den Umfang der Einprägungen (4, 26) im Bodenteil (1, 41) eine Ringvertiefung (9) zur Aufnahme von Wickelkern-Fortsätzen (10) angeordnet ist.

11. Verpackung nach Ansprüchen 1 bis 10, <u>dadurch gekenn-zeichnet</u>, daß an der Außenseite der Boden- und Deckelteile (1, 41 bzw. 2, 42) Aussparungen für Verschlußbänder (8) vorgesehen sind.

12. Verpackung nach Ansprüchen 1 bis 11, <u>dadurch gekenn-zeichnet</u>, daß in einer Nut (24) um die Einbuchtung im Deckelteil (2, 42) ein aus einem oder mehreren Teilen bestehender, gummielastisch federnder Körper (20, 39) vorhanden ist.

## Fig. 1

0062224

*Fig. 2*

Fig. 3

1  44  12  4  6'  6  22  13  5  3

*Fig. 4*

Fig. 5



## Fig. 6

Europäisches Patentamt

**EUROPÄISCHER RECHERCHENBERICHT**

0062224

Nummer der Anmeldung

EP 82 10 2377.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | DE – A1 – 2 931 250 (MINNESOTA MINING AND MANUFACTURING CO.) <br> * Anspruch 1; Seite 5, letzter Absatz bis Seite 6, erster Absatz; Seite 12, zweiter Absatz; Fig. 1 * <br> --- | 1-3 |
| D,Y | DE – A – 1 524 746 (DISC PACK CORP.) <br> * Anspruch 1; Seite 3, letzter Absatz bis Seite 5, erster Absatz * <br> --- | 1-3 |
| Y | US – A – 2 859 868 (IBM) <br> * Spalte 2, Zeilen 24 bis 32; Fig. 2 * <br> --- | 2 |
| P,Y | DE – U1 – 8 034 894 (BASF) <br> * Anspruch 2; Fig. 1 * <br> --- | 2 |
| D,A | DE – U – 7 148 615 (EMI LTD.) <br> * Anspruch 6 * <br> --- | 12 |
| A | FR – A – 2 110 653 (KODAK-PATHE) <br> * Fig. 5 * <br> ---- | |

**KLASSIFIKATION DER ANMELDUNG (Int. Cl.³)**

G 11 B 23/02

**RECHERCHIERTE SACHGEBIETE (Int. Cl.³)**

B 65 D 85/00

G 11 B 23/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 18-06-1982 | LEITHÄUSER |

EPA form 1503.1   06.78